# EUROPÄISCHE PATENTSCHRIFT

(11) **EP 1 573 277 B1**
(45) Veröffentlichungstag und Bekanntmachung des Hinweises auf die Patenterteilung: **05.03.2008**
(21) Anmeldenummer: 03795896.4
(22) Anmeldetag: 16.12.2003
(51) Int. Cl.: G01F 5/00, F16L 27/093, G01F 1/684

(54) **ANSCHLUSSSTÜCK FÜR FLUIDLEITUNGEN**
CONNECTING PIECE FOR FLUID LINES
ELEMENT DE RACCORDEMENT POUR CONDUITES FLUIDIQUES

(30) Priorität: 19.12.2002 DE 10259395
(43) Veröffentlichungstag der Anmeldung: 14.09.2005
(73) Patentinhaber: Festo AG & Co., 73734 Esslingen (DE)
(72) Erfinder: NESTLE, Volker, 73734 Esslingen (DE)
(74) Vertreter: Abel, Martin
(86) Internationale Anmeldenummer: PCT/EP2003/014268
(87) Internationale Veröffentlichungsnummer: WO 2004/057280

(56) Entgegenhaltungen:
- EP-B- 0 664 879
- DE-A- 3 905 524
- DE-U- 20 008 129
- US-A- 2 845 282
- US-A- 5 944 048

## Beschreibung

Die Erfindung betrifft ein als Winkelstück ausgebildetes Anschlussstück zum Anschließen einer Fluidleitung an ein fluidtechnisches Gerät, beispielsweise einen Antrieb, ein Ventil oder ein Wartungsgerät, mit einem Leitungsanschluss zum Fixieren einer Fluidleitung, mit einem rechtwinkelig zu dem Leitungsanschluss orientierten Geräteanschluss zum Befestigen an einem fluidtechnischen Gerät und mit einem in einem Hauptgehäuse zwischen dem Leitungsanschluss und dem Geräteanschluss verlaufenden, das Hindurchströmen eines Fluides ermöglichenden Verbindungskanal, wobei das Hauptgehäuse einen den Geräteanschluss aufweisenden ersten Hauptgehäusekörper mit einem ersten Verbindungskanalabschnitt und einen den Leitungsanschluss aufweisenden zweiten Hauptgehäusekörper mit einem mit dem ersten Verbindungskanalabschnitt kommunizierenden zweiten Verbindungskanalabschnitt aufweist.

Ein Anschlussstück dieser Art geht beispielsweise aus der DE 20008129 U hervor. Es ermöglicht den Anschluss einer Fluidleitung an einem mit einem Druckmedium zu versorgenden fluidtechnischen Gerät. Ein beispielsweise als Schraubanschluss ausgebildeter Geräteanschluss ermöglicht das Befestigen des Anschlussstückes am fluidtechnischen Gerät. Ein rechtwinkelig dazu orientierter Leitungsanschluss ermöglicht das insbesondere lösbare Fixieren einer Fluidleitung. Im Betrieb kann Druckmedium, je nach Ausgestaltung des Anschlussstückes, in der einen oder anderen Richtung zwischen den beiden Anschlüssen überströmen, wobei es einen Verbindungskanal des Anschlussstückes durchströmt.

Beim Betrieb fluidtechnischer Geräte ist es von Fall zu Fall erforderlich, die in der Regel nur als "Durchfluss" bezeichnete Durchflussrate an Druckmedium zum und/oder vom betreffenden fluidtechnischen Gerät zu bestimmen. In solchen Fällen ist es bekannt, einen Durchflusssensor in den Verlauf der Fluidleitung einzuschalten, wie er beispielsweise aus der DE 29821673 U1 oder aus der US 5332005 hervorgeht. Im Falle der DE 29821673 U1 enthält der Durchflusssensor ein Gehäuse mit axial durchgehendem Kanal, in dem ein federbelasteter Staukörper untergebracht ist. Das zuströmende Druckmedium verlagert den Staukörper, der in Abhängigkeit von seiner Position einen Positionssensor betätigt. Im Falle der US 5332005 ist ein sogenanntes Laminar-Flow-Element vorgesehen, um einen Druckabfall des hindurchströmenden Mediums hervorzurufen. Ein vor und nach dem Laminar-Flow-Element einmündender Bypass-Kanal ist einer Massenstrom-Sensoreinrichtung zugeordnet, deren Messwerte die Berechnung des Durchflusses bzw. der Durchflussrate gestatten.

Beide bekannten Durchfluss-Messvorrichtungen erfordern eine umständliche Installation im Verlauf einer Fluidleitung. Handelt es sich um eine flexible Fluidleitung, beispielsweise ein Druckluftschlauch, sind überdies zusätzliche Befestigungsmaßnahmen zu treffen, um die Durchfluss-Messvorrichtung an Ort und Stelle sicher zu fixieren.

Aus der US-A-5944048 ist eine Vorrichtung zur Detektion und Steuerung des Durchflusses eines Fluides bekannt, die ein Hauptgehäuse mit zwei sich koaxial gegenüberliegenden Anschlüssen aufweist. Eine zur Messung des Durchflusses dienende Massenstrom-Sensoreinrichtung ist an der Oberseite des Hauptgehäuses befestigt und kommuniziert über einen Bypass-Kanal mit einem die beiden Anschlüsse verbindenden Verbindungskanal. Eine Vorrichtung vergleichbaren Aufbaues offenbart auch die EP-B-0664879.

Es ist die Aufgabe der vorliegenden Erfindung, Maßnahmen vorzuschlagen, die eine einfache Durchflussmessung ermöglichen.

Zur Lösung dieser Aufgabe ist bei einem Anschlussstück der eingangs genannten Art vorgesehen, dass das Anschlussstück selbst mit einer Durchfluss-Erfassungseinrichtung ausgestattet ist, die in den Verbindungskanal eingeschaltete Druckabfall-Erzeugungsmittel und einen im Bereich der Druckabfall-Erzeugungsmittel an in Verlaufsrichtung des Verbindungskanals beabstandeten Stellen in den Verbindungskanal einmündenden Bypass-Kanal enthält, wobei dem Bypass-Kanal eine außerhalb des Verbindungskanals platzierte, auf kalorimetrischem Funktionsprinzip basierende Massenstrom-Sensoreinrichtung am oder im Anschlussstück zugeordnet ist, die auf der dem Leitungsanschluss entgegengesetzten Seite angeordnet ist.

Auf diese Weise ist die Durchfluss-Erfassungseinrichtung als unmittelbarer Bestandteil des Anschlussstückes ausgebildet und erfordert mithin keine gesonderte Herstellung oder Installation. Bei der Installation des Anschlussstückes wird die Durchfluss-Erfassungseinrichtung automatisch mitinstalliert, wobei keine besonderen Befestigungsmaßnahmen erforderlich sind, weil der Geräteanschluss die erforderliche sichere Fixierung liefert. Es besteht die Möglichkeit, die Durchfluss-Erfassungseinrichtung in ein gebräuchliches Standard-Anschlussstück zu integrieren. Insgesamt kann auf extrem reduzierten Platzverhältnissen der aktuelle Durchfluss ermittelt werden. Der Einsatz einer Massenstrom-Sensoreinrichtung lässt sich extrem kompakt realisieren, insbesondere wenn sie mit mikromechanischen Technologien hergestellt wurde. Außerdem kann die Möglichkeit geschaffen werden, über den ermittelten Wärmetransfer strömungsrichtungsabhängig den aktuellen Massenstrom zu bestimmen (Heat-Transfer-Anemometer). Eine besonders niedrige Bauweise ist möglich, weil die Massenstrom-Sensoreinrichtung auf der dem Leitungsanschluss entgegengesetzten Seite platziert ist.

Vorteilhafte Weiterbildungen der Erfindung gehen aus den Unteransprüchen hervor.

Die Massenstrom-Sensoreinrichtung ist zweckmäßigerweise geschützt in einem Aufnahmegehäuse untergebracht, das an dem den Verbindungskanal enthaltenden Hauptgehäuse des Anschlussstückes angebracht ist oder gar ganz oder teilweise von diesem Hauptgehäuse gebildet ist. Auf diese Weise lässt sich problemlos eine Schutzart von IP65 oder besser realisieren. Ist das Aufnahmegehäuse mit einem abnehmbaren Deckel versehen, kann bei Bedarf ein Austausch der Massenstrom-Sensoreinrichtung vorgenommen werden, wenn eine Umrüstung auf andere Durchflusswerte erforderlich ist.

Das Aufnahmegehäuse enthält zweckmäßigerweise auch eine gegebenenfalls vorhandene Auswerteelektronik der Durchfluss-Erfassungseinrichtung.

Besonders kleine Abmessungen sind möglich, wenn die Massenstrom-Sensoreinrichtung als Chip ausgebildet ist. Er kann mit hoher Präzision durch die Technologien der Mikrosystemtechnik realisiert werden, beispielsweise Abform- und/oder Ätztechniken oder auch mikromechanische Bearbeitungen mittels entsprechend miniaturisierten Werkzeugen.

In allen Fällen ermöglicht die Durchfluss-Erfassungseinrichtung eine Diagnose des mit dem Anschlussstück ausgestatteten fluidtechnischen Gerätes, wobei die erfassten Werte einer übergeordneten Steuereinrichtung zugeleitet werden können, die ergebnisabhängig gewisse Maßnahmen veranlasst.

Die Druckabfall-Erzeugungsmittel sind zweckmäßigerweise Bestandteil eine austauschbaren Einsatzkörpers des Anschlussstückes. Insbesondere kann der Einsatzkörper austauschbar im Hauptgehäuse des Anschlussstückes installiert sein. Der dadurch realisierte modulare Aufbau ermöglicht von Fall zu Fall die Verwendung unterschiedlicher Druckabfall-Erzeugungsmittel in Abhängigkeit von den vorhandenen Durchflusswerten. Um für unterschiedliche Strömungraten vergleichbare Druckdifferenzwerte zu erhalten, die für die Strömung durch den Bypass-Kanal verantwortlich sind, können somit baukastenartig unterschiedliche Druckabfall-Erzeugungsmittel eingesetzt werden, ohne einen Austausch der Massenstrom-Sensoreinrichtung vornehmen zu müssen. Man kann also die elektronischen Komponenten beibehalten und hat nur den rein mechanischen Teil auszutauschen.

Die Druckabfall-Erzeugungsmittel sind zweckmäßigerweise von einer Blende gebildet. Dadurch wird ein bidirektionales Messen begünstigt. Die Strömung im Bypass-Kanal wird dabei zweckmäßigerweise durch eine geeignete Blendengeometrie mit Eckdruckentnahme erzeugt, wobei der Bypass-Kanal in den beiden Eckbereichen zwischen der Blende und den sich beidseits daran anschließenden Kanalabschnitten in den Verbindungskanal mündet.

Es ist ferner vorteilhaft, wenn die Durchflussmessung im Anschlussstück zusätzlich mit einer Druck- und/oder Temperaturmessung kombiniert wird. Auf diese Weise können die wesentlichen Parameter der Strömung erfasst und weiterführende Diagnosemaßnahmen betrieben werden.

Nachfolgend wird die Erfindung anhand der beiliegenden Zeichnung näher erläutert. In dieser zeigen:
- Figur 1: eine fluidtechnische Anordnung mit einem Endabschnitt eines nur strichpunktiert angedeuteten fluidtechnischen Gerätes, das mit einer bevorzugten Bauform des erfindungsgemäßen Anschlussstückes ausgestattet ist,

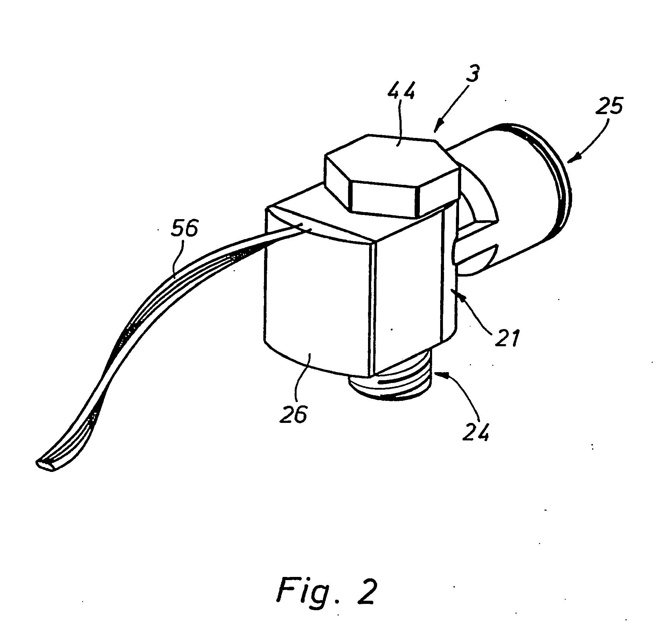

- Figur 2: das Anschlussstück aus Figur 1, aus einer anderen Blickrichtung gesehen und
- Figur 3: einen Längsschnitt durch das Anschlussstück der Figuren 1 und 2, wobei strichpunktiert eine angeschlossene oder anschließbare Fluidleitung angedeutet ist.

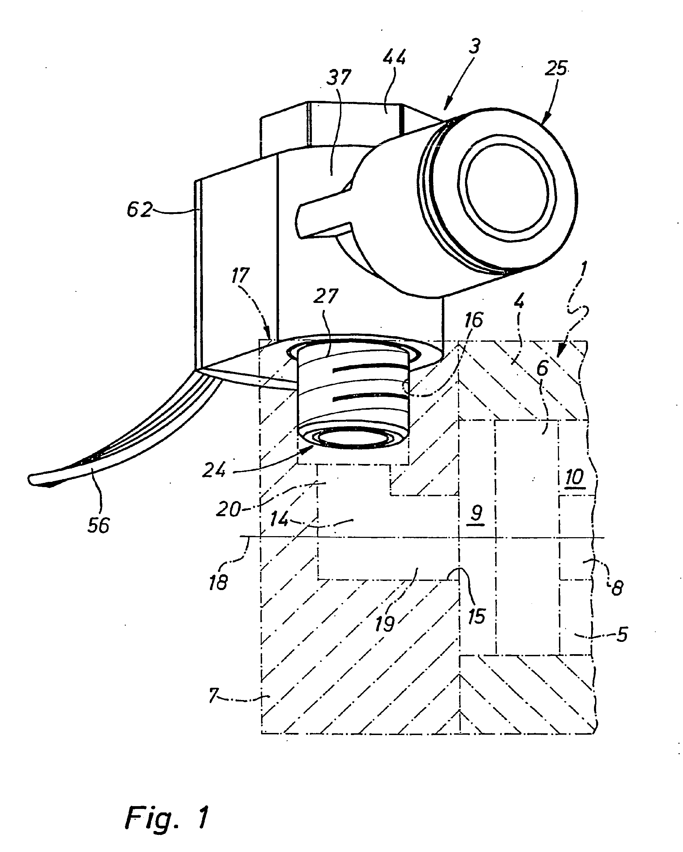

Die Figur 1 zeigt in strichpunktierten Linien den Endabschnitt eines mit pneumatischem oder hydraulischem Druckmedium betriebenen fluidtechnischen Gerätes 1, das beim Ausführungsbeispiel ein durch Fluidkraft betätigter Antrieb ist, beispielweise ein pneumatischer Arbeitszylinder. Es könnte sich bei dem fluidtechnischen Gerät 1 auch um einen anderen Gerätetyp handeln, der mit fluidischem Druckmedium betrieben wird, beispielsweise ein Ventil oder ein zur Druckluftaufbereitung eingesetztes Wartungsgerät.

Das als Linearantrieb ausgebildete fluidtechnische Gerät 1 des Ausführungsbeispiels verfügt über ein längliches Gerätegehäuse 4, das einen Gehäuse-Innenraum 5 definiert, in dem ein Kolben 6 axial verschiebbar angeordnet ist. Der Gehäuse-Innenraum 5 ist an beiden Stirnseiten durch je einen Gehäusedeckel 7 verschlossen, von denen jedoch nur einer abgebildet ist. Eine mit dem Kolben 6 verbundene Kolbenstange 8 durchsetzt den nicht abgebildeten Gehäusedeckel 7 und ermöglicht die Verbindung zu einem zu bewegenden Bauteil (nicht dargestellt).

Der Kolben 6 unterteilt den Gehäuse-Innenraum 5 unter Abdichtung in zwei Arbeitskammern 9, 10, bezüglich denen ein fluidisches Druckmedium zugeführt und abgeführt werden kann, um den Kolben 6 in einer gewünschten Weise linear zu verlagern. Die Zufuhr und Abfuhr von Druckmedium bezüglich der kolbenstangenseitigen Arbeitskammer 10 erfolgt über einen Gerätekanal im Innern des nicht dargestellten Gehäusedeckels. Die Zufuhr und Abfuhr des Druckmediums bezüglich der auf der entgegengesetzten Seite des Kolbens 6 liegenden Arbeitskammer 9 erfolgt durch einen Gerätekanal 14 hindurch, der das Gerätegehäuse 4 durchsetzt und insbesondere im Gehäusedeckel 7 verläuft. Der Gerätekanal 14 mündet mit einer inneren Mündung 15 insbesondere koaxial in die zugeordnete Arbeitskammer 9 und ist mit einer äußeren Mündung 16 zu einer Außenfläche 17 des Gerätegehäuses 4 hin, vorliegend am Gehäusedeckel 7, offen.

Die äußere Mündung 16 ist beim Ausführungsbeispiel rechtwinkelig zur Längsachse 18 des fluidtechnischen Gerätes orientiert, wohingegen die innere Mündung 15 in Richtung der Längsachse 18 verweist, so dass der Gerätekanal 14 einen um 90° abknickenden Verlauf hat. Im Einzelnen besitzt der Gerätekanal 14 beim Ausführungsbeispiel einen von der inneren Mündung 15 ausgehenden axialen Längenabschnitt 19 sowie einen von der äußeren Mündung 16 ausgehenden radialen Längenabschnitt 20.

Die Zufuhr und Abfuhr des Druckmediums erfolgt mittels eines Anschlussstückes 3 der erfindungsgemäßen Bauart. Dieses Anschlussstück 3 hat den Vorteil, dass es unmittelbar mit einer Durchfluss-Erfassungseinrichtung 2 ausgestattet ist, die eine sehr exakte Erfassung der Durchflussrate des durch das Anschlussstück 3 hindurchströmenden und somit zum oder vom fluidtechnischen Gerät 1 zu- bzw. abströmenden Druckmediums ermöglicht. Es ist also eine Durchfluss-Erfassungseinrichtung 2 in das Anschlussstück 3 integriert, das mithin eine Doppelfunktion hat und mit kompakten Abmessungen sowohl die Strömungsführung als auch die Durchflusserfassung ermöglicht.

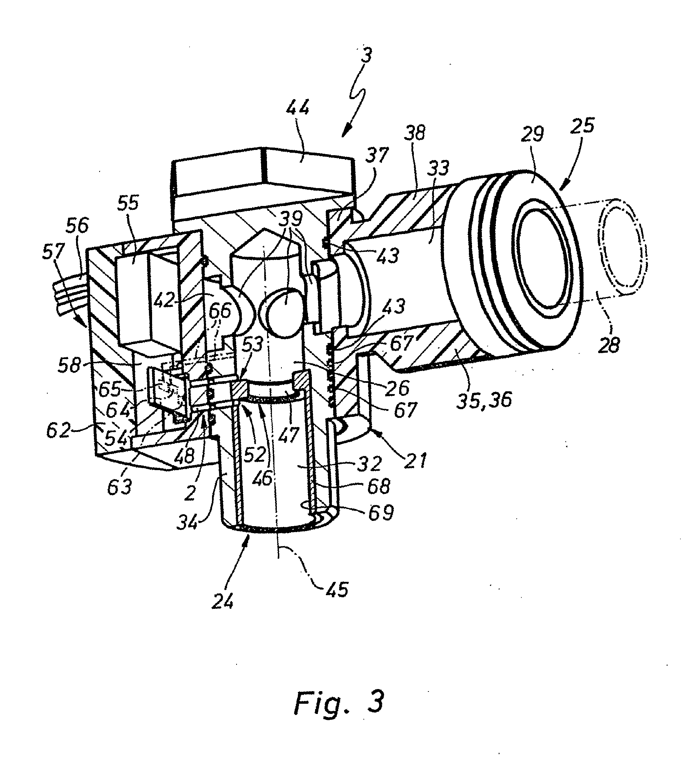

Wie insbesondere auch aus Figur 3 näher hervorgeht, enthält das Anschlussstück 3 ein in seiner Gesamtheit mit Bezugsziffer 21 bezeichnetes Hauptgehäuse, das zum einen mit einem Geräteanschluss 24 und zum anderen mit einem Leitungsanschluss 25 ausgestattet ist. Zwischen den beiden Anschlüssen 24, 25 verläuft im Innern des Hauptgehäuses 21 ein in seiner Gesamtheit mit Bezugsziffer 26 bezeichneter Verbindungskanal. Durch den Verbindungskanal 26 hindurch kann Fluid zwischen den beiden Anschlüssen 24, 25 - beim Ausführungsbeispiel in beiden Richtungen - strömen.

Mit dem Geräteanschluss 24 kann das Anschlussstück 3 im Mündungsbereich der äußeren Mündung 16 des Gerätekanals 14 insbesondere lösbar befestigt werden. Die Befestigung geschieht beim Ausführungsbeispiel durch Einschrauben des Geräteanschlusses 24 in die äußere Mündung 16 und den sich daran anschließenden Kanalabschnitt. Der Geräteanschluss 24 ist zu diesem Zweck hohlzylindrisch ausgebildet und mit einem Außengewinde 27 versehen, das in ein komplementäres Innengewinde des Gerätekanals 14 einschraubbar ist. Der Geräteanschluss 24 ist also ein Schraubanschluss und kann durch einen Schraubvorgang in den Gerätekanal 14 eingesetzt werden.

Bei einer nicht näher dargestellten alternativen Bauform ist der Geräteanschluss 24 als Steckschaft ausgebildet, wobei sich geräteseitig im Bereich der äußeren Mündung 16 eine Steckverbindungseinrichtung befindet, die ein Befestigen des Anschlussstückes 3 durch einen Steckvorgang ermöglicht.

Der Leitungsanschluss 25 ist zum insbesondere lösbaren Befestigen einer strichpunktiert angedeuteten Fluidleitung 28 vorgesehen. Die Fluidleitung 28 kann insbesondere ein Druckmittelschlauch sein.

Der Leitungsanschluss 25 kann prinzipiell ebenfalls als Schraubanschluss ausgeführt sein, in oder an dem sich eine Fluidleitung 28 durch einen Schraubvorgang befestigen lässt. Beim Ausführungsbeispiel enthält er jedoch die bevorzugte Ausgestaltung eines Steckanschlusses, bei dem die Fluidleitung 28 zum Anschließen lediglich koaxial eingesteckt werden muss. Zum Lösen wird ein Löseelement 29 des Leitungsanschlusses 25 betätigt, so dass nicht gezeigte Haltemittel außer Eingriff mit der Wandung der Fluidleitung 28 gelangen und die Fluidleitung 28 zerstörungsfrei herausgezogen werden kann.

Das Anschlussstück 3 ist beim Ausführungsbeispiel als Winkelstück ausgebildet. Die beiden Anschlüsse 24, 25 sind winkelig zueinander und vorzugsweise rechtwinkelig zueinander angeordnet. Der Leitungsanschluss 25 ist seitlich an dem Anschlussstück 3 platziert.

Der Verbindungskanal 26 ist in einen ersten und einen zweiten Verbindungskanalabschnitt unterteilt. Diese beiden Verbindungskanalabschnitte 32, 33 verlaufen beim Ausführungsbeispiel rechtwinkelig zueinander. Außerdem sind die beiden Verbindungskanalabschnitte 32, 33 in zwei gesonderten Komponenten des Hauptgehäuses 21 untergebracht, wobei der erste Verbindungskanalabschnitt 32 in einem den Geräteanschluss 24 aufweisenden ersten Hauptgehäusekörper 34 verläuft, während sich der zweite Verbindungskanalabschnitt 33 in einem mit dem Leitungsanschluss 25 ausgestatteten zweiten Hauptgehäusekörper 35 erstreckt.

Die beiden Hauptgehäusekörper 34, 35 sind miteinander gekoppelt. Es kann sich um eine feste Verbindung handeln, wobei das Ausführungsbeispiel jedoch eine drehbewegliche Verbindung vorsieht, da hier das Anschlussstück 3 nach Art einer Schwenkverschraubung ausgebildet ist.

Der zweite Hauptgehäusekörper 35 ist als Schwenkteil ausgebildet, das verdrehbar auf dem länglichen, insbesondere als Hohlschraube ausgebildeten ersten Hauptgehäusekörper 34 gelagert ist. Zur Drehlagerung verfügt das Schwenkteil 36 über einen koaxial auf dem ersten Hauptgehäusekörper 34 sitzenden Ringkörper 37, von dem ein Anschlussstutzen 38 radial absteht, an dessen freiem Ende der Leitungsanschluss 25 vorgesehen ist.

Der zweite Verbindungskanalabschnitt 33 durchsetzt den Anschlussstutzen 38 in Längsrichtung und trifft mit rechtwinkeliger Ausrichtung auf den ersten Hauptgehäusekörper 34. Der erste Verbindungskanalabschnitt 32 steht über eine oder mehrere radiale Bohrungen 39 mit einem zwischen dem ersten Hauptgehäusekörper 34 und dem Ringkörper 37 definierten konzentrischen Ringkanal 42 in Verbindung. Der zweite Verbindungskanalabschnitt 33 mündet an der Innenfläche des Ringkörpers 37 auf Höhe des Ringkanals 42 aus. Dadurch steht er unabhängig von der momentanen Drehposition des Schwenkteils 36 stets mit dem ersten Verbindungskanalabschnitt 32 in fluidischer Verbindung.

Zwei axial beabstandete Ringdichtungen 43 zwischen den beiden Hauptgehäusekörpern 34, 35 sorgen für einen leckagefreien Fluidübertritt zwischen den beiden Verbindungskanaläbschnitten 32, 33.

Der erste Verbindungskanalabschnitt 32 endet an der dem Geräteanschluss 24 entgegengesetzten Oberseite des Anschlussstückes 3 innerhalb des ersten Hauptgehäusekörpers 34. Es schließt sich dort ein Kopf 44 des ersten Hauptgehäusekörpers 34 an, dessen Außenfläche vorzugsweise so gestaltet ist, dass sich ein Schraubwerkzeug für das Ein- und Ausschrauben des ersten Hauptgehäusekörpers 34 bezüglich des Gerätekanals 14 ansetzen lässt.

Die oben angesprochene Durchfluss-Erfassungseinrichtung 2 ist mit Druckabfall-Erzeugungsmitteln 46 ausgestattet, die in den Verbindungskanal 26 eingeschaltet sind. Bevorzugt befinden sie sich in dem im ersten Hauptgehäusekörper 34 verlaufenden ersten Verbindungskanalabschnitt 32. Sie bewirken einen Druckabfall des durch sie hindurchströmenden Druckmediums, so dass, bezogen auf die Strömungsrichtung, vor ihnen ein höherer Druck herrscht als danach. Bevorzugt sind die Druckabfall-Erzeugungsmittel 46 von einer Blende 47 gebildet, die innerhalb des Verbindungskanals 26 eine den Strömungsquerschnitt konzentrisch verengende Engstelle definiert.

Im Bereich der Druckabfall-Erzeugungsmittel 46 mündet ein Bypass-Kanal 48 an zwei Abgriffsstellen 52, 53 in den Verbindungskanal 26 ein. Die Abgriffsstellen 52, 53 sind in der Verlaufsrichtung des Verbindungskanals 26 mit Abstand zueinander angeordnet, wobei sie, zumindest im Zusammenhang mit einer Blende 47, zum einen vor und zum anderen nach den Druckabfall-Erzeugungsmitteln 46 vorgesehen sind.

Wenn im Betrieb des Anschlussstückes Druckmedium durch den Verbindungskanal 26 strömt, stellt sich im Verbindungskanal 26 eine Druckdifferenz zwischen den beiden durch die Blende 47 voneinander getrennten Kanalabschnitten ein. Diese Druckdifferenz führt dazu, dass ein Teil des Druckmediums die Blende 47 durch den Bypass-Kanal 48 hindurch umströmt. Die Abgriffsstellen 52, 53 befinden sich hier zweckmäßigerweise in den beiden Eckbereichen zwischen der Blende 47 und den sich beidseits daran anschließenden Kanalabschnitten des Verbindungskanals 26, so dass man von einer Eckdruckentnahme sprechen kann.

Dem Bypass-Kanal 48 ist eine außerhalb des Verbindungskanals 26 platzierte, auf kalorimetrischem Funktionsprinzip basierende Massenstrom-Sensoreinrichtung 54 zugeordnet, die am oder im Anschlussstück 3 vorgesehen ist. Die Massenstrom-Sensoreinrichtung 54 ermittelt den durch den im Vergleich zum Verbindungskanal 26 einen relativ kleinen Durchmesser aufweisenden Bypass-Kanal 48 strömenden Massenstrom, der in einer ebenfalls am oder im Anschlussstück 3 vorgesehenen Auswerteelektronik 55 zur Strömung im Verbindungskanal 26 korreliert wird. Somit kann letztlich über mit der Auswerteelektronik 55 verbundene elektrische Kabel 56 oder über andere elektromechanische Anschlussmaßnahmen ein Abgriff der gewünschten Messwerte erfolgen.

Die Massenstrom-Sensoreinrichtung 54 ist zusammen mit der Auswerteelektronik 55 in einem Aufnahmegehäuse 57 untergebracht, das als Bestandteil des Anschlussstückes 3 ausgeführt ist. Es kann sich um eine gesonderte Komponente handeln, die durch beliebige Befestigungsmittel am Hauptgehäuse 21 fixiert ist. Beim Ausführungsbeispiel ist das Aufnahmegehäuse 57 teilweise vom Hauptgehäuse 21 gebildet, das insoweit eine Doppelfunktion übernimmt.

Das Aufnahmegehäuse 57 definiert einen Aufnahmeraum 58, der die vorerwähnten Komponenten enthält. Dieser Aufnahmeraum 58 kann durch Entfernen eines abnehmbaren Gehäusedeckels 62 des Aufnahmegehäuses 57 zugänglich gemacht werden. Dadurch können die einzelnen Komponenten im Defektfalle leicht ausgetauscht werden.

Zweckmäßigerweise ist das Aufnahmegehäuse 57 am zweiten Hauptgehäusekörper 35 vorgesehen. Es befindet sich zweckmäßigerweise auf der dem Leitungsanschluss 25 bezüglich der Längsachse 45 diametral entgegengesetzten Seite. Dementsprechend ist auch die Massenstrom-Sensoreinrichtung 54 in diesem Bereich angeordnet. Dies ermöglicht in der Längsrichtung des ersten Hauptgehäusekörpers 34, also in Höhenrichtung des Anschlussstückes 3, sehr kompakte Abmessungen.

Als weitere Maßnahme, die sehr kompakte Abmessungen ermöglicht, ist die Massenstrom-Sensoreinrichtung 54 als Chip ausgebildet, der durch bekannte Technologien der Mikrosystemtechnik hergestellt ist. Er enthält eine aktive Chipfläche 63, die so angeordnet ist, dass sie von dem den Bypass-Kanal durchströmenden Druckmedium berührt wird.

Die Massenstrom-Sensoreinrichtung 54 kann nicht nur den Durchfluss durch den Bypass-Kanal bestimmen, sondern ist auch in der Lage, die Strömungsrichtung zu detektieren. Dabei wird das Messverfahren der sogenannten Heat-Transfer-Anemometrie angewandt. Da die Strömungsrichtung im Bypass-Kanal der momentanen Strömungsrichtung im Verbindungskanal 26 entspricht, ist die Durchfluss-Erfassungseinrichtung 2 folglich auch in der Lage, die Strömungsrichtung des Druckmediums im Verbindungskanal zu detektieren.

Lediglich strichpunktiert ist in Figur 3 angedeutet, dass das Anschlussstück zusätzlich zu der Durchfluss-Erfassungseinrichtung 2 auch noch mit Druckerfassungsmitteln 64 und/oder mit Temperaturerfassungsmitteln 65 zur Erfassung der entsprechenden Daten des im Verbindungskanal herrschenden Druckmediums ausgestattet sein kann. Der Abgriff der Messwerte erfolgt vorzugsweise über entsprechende Abgriffskanäle 66 unmittelbar im Verbindungskanal 26. Die aktiven Bestandteile befinden sich zweckmäßigerweise, wie die aktive Chipfläche 63, direkt an dem gegebenenfalls vorhandenen Chip.

Damit die Drehbarkeit des Schwenkteils 36 gegeben ist, sind die zu den beiden Abgriffsstellen 52, 53 führenden Kanaläste des Bypass-Kanals in vergleichbarer Weise in zwei Kanalabschnitte unterteilt, wie dies beim Verbindungskanal 26 der Fall ist. Zwischen den beiden Kanalabschnitten erstreckt sich jeweils ein Ringkanal 67, der zwischen dem Ringkörper 37 und dem ersten Hauptgehäusekörper 34 vorgesehen ist und der eine Fluidverbindung unabhängig von der jeweiligen Drehposition des Schwenkteils 36 garantiert.

Das Anschlussstück 3 des Ausführungsbeispiels zeichnet sich durch eine hohe Flexibilität hinsichtlich des verarbeitbaren Messbereiches aus. Die Durchfluss-Erfassungseinrichtung 2 kann ohne Austausch ihrerseits eingesetzt werden, um unterschiedlich große Volumenströme im Verbindungskanal 26 zu messen. In diesem Falle genügt ein einfacher Austausch der Druckabfall-Erzeugungsmittel 46. Beim Ausführungsbeispiel wird hierzu die vorhandene Blende 47 durch eine Blende mit größerem oder kleinerem Blendendurchmesser ausgetauscht. Man kann somit erreichen, dass unabhängig vom Volumenstrom vergleichbare Druckdifferenzen an der Blende auftreten, die die Massenstrom-Sensoreinrichtung 54 bequem verarbeiten kann.

Beim Ausführungsbeispiel wird die Modularität dadurch realisiert, dass die Druckabfall-Erzeugungsmittel 46 - hier: die Blende 47 - Bestandteil eines Einsatzkörpers 68 sind, der austauschbar im Hauptgehäuse 21 fixiert ist.

Der Einsatzkörper 68 ist beim Ausführungsbeispiel ein hülsenförmiges Bauteil mit angeformter Blende 47. Es kann in eine komplementäre Aufnahme 69 des ersten Hauptgehäusekörpers 34 eingesetzt werden, wobei es mit seinem Innenumfang gleichzeitig einen Längenabschnitt des ersten Verbindungskanalabschnittes 32 definiert.

Bei der Herstellung oder beim späteren Einsatz des Anschlussstückes 3 können mehrere Einsatzkörper 68 bereitgestellt werden, die über unterschiedliche Querschnittsgeometrien verfügen und die alternativ in die Aufnahme 69 eingesetzt werden, entsprechend den zu erwartenden Strömungsverhältnissen.

## Patentansprüche

1. Als Winkelstück ausgebildetes Anschlussstück zum Anschließen einer Fluidleitung an ein fluidtechnisches Gerät, beispielsweise einen Antrieb, ein Ventil oder ein Wartungsgerät, mit einem Leitungsanschluss (25) zum Fixieren einer Fluidleitung (28), mit einem rechtwinkelig zu dem Leitungsanschluss (25) orientierten Geräteanschluss (24) zum Befestigen an einem fluidtechnischen Gerät (1) und mit einem in einem Hauptgehäuse (21) zwischen dem Leitungsanschluss (25) und dem Geräteanschluss (24) verlaufenden, das Hindurchströmen eines Fluides ermöglichenden Verbindungskanal (26), wobei das Hauptgehäuse (21) einen den Geräteanschluss (24) aufweisenden ersten Hauptgehäusekörper (34) mit einem ersten Verbindungskanalabschnitt (32) und einen den Leitungsanschluss (25) aufweisenden zweiten Hauptgehäusekörper (35) mit einem mit dem ersten Verbindungskanalabschnitt (32) kommunizierenden zweiten Verbindungskanalabschnitt (33) aufweist, **dadurch gekennzeichnet, dass** das Anschlussstück (3) selbst mit einer Durchfluss-Erfassungseinrichtung (2) ausgestattet ist, die in den Verbindungskanal (26) eingeschaltete Druckabfall-Erzeugungsmittel (46) und einen im Bereich der Druckabfall-Erzeugungsmittel (46) an in Verlaufsrichtung des Verbindungskanals (26) beabstandeten Stellen in den Verbindungskanal (26) einmündenden Bypass-Kanal (48) enthält, wobei dem Bypass-Kanal (48) eine außerhalb des Verbindungskanals (26) platzierte, auf kalorimetrischem Funktionsprinzip basierende Massenstrom-Sensoreinrichtung (54) am oder im Anschlussstück (3) zugeordnet ist, die auf der dem Leitungsanschluss (25) entgegengesetzten Seite angeordnet ist.

2. Anschlussstück nach Anspruch 1, **dadurch gekennzeichnet, dass** der zweite Hauptgehäusekörper (35) als an dem ersten Hauptgehäusekörper (34) drehbar gelagertes Schwenkteil (36) ausgebildet ist.

3. Anschlussstück nach Anspruch 1 oder 2, **dadurch gekennzeichnet, dass** die Massenstrom-Sensoreinrichtung (54) in einem an dem Hauptgehäuse (21) angeordneten oder zumindest teilweise von dem Hauptgehäuse (21) gebildeten Aufnahmegehäuse (57) untergebracht ist.

4. Anschlussstück nach Anspruch 3, **gekennzeichnet durch** einen abnehmbaren Deckel (62) des Aufnahmegehäuses (57).

5. Anschlussstück nach einem der Ansprüche 1 bis 4, **dadurch gekennzeichnet, dass** die Durchfluss-Erfassungseinrichtung (2) eine mit der Massenstrom-Sensoreinrichtung (54) zusammenarbeitende Auswerteelektronik (55) aufweist.

6. Anschlussstück nach Anspruch 5 in Verbindung mit Anspruch 3 oder 4, **dadurch gekennzeichnet, dass** die Auswerteelektronik (55) ebenfalls in dem Aufnahmegehäuse (57) untergebracht ist.

7. Anschlussstück nach einem der Ansprüche 3 bis 6, **dadurch gekennzeichnet, dass** das Aufnahmegehäuse (57) an dem zweiten Hauptgehäusekörper (35) vorgesehen ist.

8. Anschlussstück nach einem der Ansprüche 1 bis 7, **dadurch gekennzeichnet, dass** die Massenstrom-Sensoreinrichtung (54) als Chip ausgebildet ist.

9. Anschlussstück nach einem der Ansprüche 1 bis 8, **dadurch gekennzeichnet, dass** die Massenstrom-Sensoreinrichtung (54) eine mikrosystemtechnisch aufgebaute Komponente ist.

10. Anschlussstück nach einem der Ansprüche 1 bis 9, **dadurch gekennzeichnet, dass** die Druckabfall-Erzeugungsmittel (46) austauschbar sind.

11. Anschlussstück nach Anspruch 10, **dadurch gekennzeichnet, dass** die Druckabfall-Erzeugungsmittel (46) Bestandteil eines austauschbaren Einsatzkörpers (68) sind.

12. Anschlussstück nach Anspruch 11, **dadurch gekennzeichnet, dass** der Einsatzkörper (68) zumindest einen Längenabschnitt des Verbindungskanals (26) definiert.

13. Anschlussstück nach einem der Ansprüche 1 bis 12, **dadurch gekennzeichnet, dass** die Druckabfall-Erzeugungsmittel (46) von einer Blende (47) gebildet sind.

14. Anschlussstück nach Anspruch 13, **dadurch gekennzeichnet, dass** der Bypass-Kanal (48) in den beiden Eckbereichen zwischen der Blende (47) und den sich beidseits daran anschließenden Abschnitten des Verbindungskanals (26) in den Verbindungskanal (26) mündet.

15. Anschlussstück nach einem der Ansprüche 1 bis 14, **gekennzeichnet durch** eine Ausstattung mit zusätzlichen Druckerfassungsmitteln (64) für den im Verbindungskanal (26) herrschenden Fluiddruck.

16. Anschlussstück nach einem der Ansprüche 1 bis 15, **gekennzeichnet durch** eine Ausstattung mit zusätzlichen Temperaturerfassungsmitteln (65) für die im Verbindungskanal (26) herrschende Fluidtemperatur.

## Claims

1. Connecting piece designed as an elbow for connecting a fluid line to a fluid power device, such as a drive, a valve or a service unit, with a line port (25) for mounting a fluid line (28), with a device port (24) oriented at right angles to the line port (25) for attaching to a fluid power device (1), and with a connecting passage (26) extending in a main housing (21) between the line port (25) and the device port (24) and permitting the flowing through of a fluid, wherein the main housing (21) comprises a main housing body (34) with the device port (24) and with a first connecting passage section (32) and a second main housing body (35) with the line port (25) and with a second connecting passage section (33) communicating with the first connecting passage section (32), **characterised in that** the connecting piece (3) is itself provided with a flow detection device (2), which comprises pressure drop generating means (46) installed into the connecting passage (26) and a bypass passage (48) terminating in the connecting passage (26) in the region of the pressure drop generating means (46) at points spaced in the routing direction of the connecting passage (26), wherein a mass flow sensor device (54) located outside the connecting passage (26) and based on calorimetric principles, which is located on the side opposite the line port (25), is assigned to the bypass passage (48) on or in the connecting piece (3).

2. Connecting piece according to claim 1, **characterised in that** the second main housing body (35) is designed as a pivoting part (36) rotatably mounted on the first main housing body (34).

3. Connecting piece according to claim 1 or 2, **characterised in that** the mass flow sensor device (54) is accommodated in a location housing (57) located on the main housing (21) or at least partially represented by the main housing (21).

4. Connecting piece according to claim 3, **characterised by** a removable cover (62) of the location housing (57).

5. Connecting piece according to any of claims 1 to 4, **characterised in that** the flow detection device (2) is provided with evaluation electronics (55) acting together with the mass flow sensor device (54).

6. Connecting piece according to claim 5 in conjunction with claim 3 or 4, **characterised in that** the evaluation electronics (55) are also accommodated in the location housing (57).

7. Connecting piece according to any of claims 3 to 6, **characterised in that** the location housing (57) is provided on the second main housing body (35).

8. Connecting piece according to any of claims 1 to 7, **characterised in that** the mass flow sensor device (54) is designed as a chip.

9. Connecting piece according to any of claims 1 to 8, **characterised in that** the mass flow sensor device (54) is a component constructed using micro-system technology.

10. Connecting piece according to any of claims 1 to 9, **characterised in that** the pressure drop generating means (46) are replaceable.

11. Connecting piece according to any of claims 1 to 10, **characterised in that** the pressure drop generating means (46) are a part of a replaceable insert body (68).

12. Connecting piece according to any of claims 1 to 11, **characterised in that** the insert body (68) defines at least one section of the length of the connecting passage (26).

13. Connecting piece according to any of claims 1 to 12, **characterised in that** the pressure drop generating means (46) are represented by an orifice (47).

14. Connecting piece according to claim 13, **characterised in that** the bypass passage (48) terminates in the connecting passage (26) in the two corner regions between the orifice (47) and the sections of the connecting passage (26) adjoining both sides thereof.

15. Connecting piece according to any of claims 1 to 14, **characterised by** the provision of additional pressure detection means (64) for the fluid pressure prevailing in the connecting passage (26).

16. Connecting piece according to any of claims 1 to 15, **characterised by** the provision of additional temperature detection means (65) for the fluid temperature prevailing in the connecting passage (26).

## Revendications

1. Élément de raccordement sous forme d'élément en angle, pour le raccordement d'une conduite de fluide à un dispositif fluidique, tel qu'un système d'entraînement, une vanne ou un dispositif de maintenance, avec un raccord de conduite (25) pour la fixation d'une conduite fluidique (28), avec un raccord de dispositif (24), orienté perpendiculairement au raccord de conduite (25) et destiné à la fixation d'un dispositif fluidique (1), et avec un conduit de liaison (26) s'étendant dans un boîtier principal (21) entre le raccord de conduite (25) et le raccord de dispositif (24) et permettant la circulation d'un fluide, le boîtier principal (21) comportant un premier corps de boîtier principal (34), muni du raccord de dispositif (24) et d'un premier segment de conduit de liaison (32), et un deuxième corps de boîtier principal (35), muni du raccord de conduite (25) et d'un deuxième segment de conduit de liaison (33) communiquant avec le premier segment de conduit de liaison (32), **caractérisé en ce que** l'élément de raccordement (3) lui-même est équipé d'un dispositif de détection de débit (2), qui comporte des moyens (46) générant une chute de pression, montés dans le conduit de liaison (26), et un conduit de dérivation (48), débouchant dans le conduit de liaison (26) dans la zone des moyens (46) générant une chute de pression, à des emplacements écartés l'un de l'autre dans le sens d'orientation du conduit de liaison (26), le conduit de dérivation (48) étant associé à un dispositif de détection de débit massique (54), qui est situé au niveau de l'élément de raccordement (3) ou dans celui-ci en dehors du conduit de liaison (26) et est basé sur un principe de fonctionnement calorimétrique et qui est disposé sur le côté opposé au raccord de conduite (25).

2. Élément de raccordement selon la revendication 1, **caractérisé en ce que** le deuxième corps de boîtier principal (35) est réalisé sous la forme d'un élément pivotant (36), monté de manière rotative sur le premier corps de boîtier principal (34).

3. Élément de raccordement selon la revendication 1 ou 2, **caractérisé en ce que** le dispositif de détection de débit massique (54) est logé dans un boîtier de réception (57), placé sur le boîtier principal (21) ou formé au moins partiellement par le boîtier principal (21).

4. Élément de raccordement selon la revendication 3, **caractérisé par** un couvercle (62) amovible du boîtier de réception (57).

5. Élément de raccordement selon l'une des revendications 1 à 4, **caractérisé en ce que** le dispositif de détection de débit (2) comporte une électronique d'analyse (55) coopérant avec le dispositif de détection de débit massique (54).

6. Élément de raccordement selon la revendication 5 en combinaison avec la revendication 3 ou 4, **caractérisé en ce que** l'électronique d'analyse (55) est également logée dans le boîtier de réception (57).

7. Élément de raccordement selon l'une des revendications 3 à 6, **caractérisé en ce que** le boîtier de réception (57) est prévu sur le deuxième corps de boîtier principal (35).

8. Élément de raccordement selon l'une des revendications 1 à 7, **caractérisé en ce que** le dispositif de détection de débit massique (54) est réalisé sous la forme d'une puce.

9. Élément de raccordement selon l'une des revendications 1 à 8, **caractérisé en ce que** le dispositif de détection de débit massique (54) est un composant configuré selon la technique des microsystèmes.

10. Élément de raccordement selon l'une des revendications 1 à 9, **caractérisé en ce que** les moyens (46) générant une chute de pression sont interchangeables.

11. Élément de raccordement selon la revendication 10, **caractérisé en ce que** les moyens (46) générant une chute de pression sont une partie intégrante d'un corps inséré (68) interchangeable.

12. Élément de raccordement selon la revendication 11, **caractérisé en ce que** le corps inséré (68) définit au moins un tronçon longitudinal du conduit de liaison (26).

13. Élément de raccordement selon l'une des revendications 1 à 12, **caractérisé en ce que** les moyens (46) générant une chute de pression sont formés par un diaphragme (47).

14. Élément de raccordement selon la revendication 13, **caractérisé en ce que** le conduit de dérivation (48) débouche dans le conduit de liaison (26) dans les deux zones d'angle entre l'obturateur (47) et les tronçons, adjacents à celui-ci, du conduit de liaison (26).

15. Élément de raccordement selon l'une des revendications 1 à 14, **caractérisé par** la présence de moyens supplémentaires de détection de la pression (64) pour la pression du fluide régnant dans le conduit de liaison (26).

16. Élément de raccordement selon l'une des revendications 1 à 15, **caractérisé par** la présence de moyens supplémentaires de détection de la température (65) pour la température du fluide régnant dans le conduit de liaison (26).
